# EUROPEAN PATENT APPLICATION

(11) **EP 4 797 788 A1**
(43) Date of publication of application: **26.08.2026**
(21) Application number: 24884590.1
(22) Date of filing: 25.10.2024
(51) Int. Cl.: H04W 28/08

(54) **COMMUNICATION METHOD, APPARATUS AND SYSTEM**

(30) Priority: 03.11.2023 CN 202311464463
(71) Applicant: HUAWEI TECHNOLOGIES CO., LTD., Shenzhen, Guangdong 518129 (CN)
(72) Inventor: CHANG, Junren, Shenzhen, Guangdong 518129 (CN); LI, Bingzhao, Shenzhen, Guangdong 518129 (CN); LIU, Nannan, Shenzhen, Guangdong 518129 (CN)
(74) Representative: Gill Jennings & Every LLP
(86) International application number: PCT/CN2024/127329
(87) International publication number: WO 2025/092587

(57) **Abstract**

This application provides a communication method, apparatus, and system, applicable to a device-cloud collaboration scenario. The method includes: A terminal device obtains a first parameter, where the first parameter indicates a state of a channel between the terminal device and a network device; and if the first parameter meets a preset condition, performs a first processing manner, where the first processing manner is that the terminal device sends data of a first service to the network device, and receives processed data of the first service; or if the first parameter does not meet the preset condition, performs second processing, where the second processing manner is that the terminal device processes the data of the first service. The method can ensure service quality, and reduce power consumption of processing service data by the terminal.

## Description

This application claims priority to Chinese Patent Application No. 202311464463.9, filed with the China National Intellectual Property Administration on November 3, 2023 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

To reduce a processing burden of a terminal while satisfying requirements such as service delay, cost, coverage, privacy, and the like, one manner currently used is mutual collaboration among the terminal, a network device, and a cloud for service processing. Currently, a manner of determining to offload a part of processing tasks to the cloud based on only a computational power level of the terminal may cause increased processing power consumption of a baseband chip (for example, a communication chip like a modem chip) of the terminal when the terminal is at a far point covered by a cell (for example, at a location close to a cell edge), although processing power consumption of a graphics processing unit (graphics processing unit, GPU) of the terminal device is reduced or processing requirements on a GPU on the terminal side are reduced by offloading compute tasks to the cloud for processing.

### SUMMARY

This application provides a communication method, apparatus, and system, to reduce power consumption of a terminal device.

According to a first aspect, a communication method is provided. The method may be performed by a terminal device, or may be performed by a chip or a circuit used for the terminal device. This is not limited in this application. For ease of description, the following uses an example in which the terminal device performs the method for description.

The method includes: The terminal device obtains a first parameter, where the first parameter indicates a state of a channel between the terminal device and a network device; and if the first parameter meets a preset condition, performs a first processing manner, where the first processing manner is that the terminal device sends data of a first service to the network device, and receives processed data of the first service; or if the first parameter does not meet the preset condition, performs second processing, where the second processing manner is that the terminal device processes the data of the first service.

When the first parameter meets the preset condition, a difference between power consumption of the first processing manner and power consumption of the second processing manner is less than or equal to P, and P is greater than or equal to 0; or a difference between power efficiency of the first processing manner and power efficiency of the second processing manner is greater than or equal to K, and K is greater than or equal to 0, where the second processing manner is that the terminal device processes the data of the first service. When the first parameter does not meet the preset condition, a difference between power consumption of the first processing manner and power consumption of the second processing manner is greater than M, and M is greater than or equal to 0; or a difference between power efficiency of the first processing manner and power efficiency of the second processing manner is less than N, and N is less than or equal to 0.

In this method, whether to perform first processing is determined based on the preset condition. If the channel state of the channel between the terminal device and the network device meets the preset condition, energy consumed by a user to transmit a specific amount of uplink data in a cell to a cloud for processing, obtain processed data from the cloud, and output user-perceivable service data is equal to or close to energy consumed by the user to locally perform computation processing to obtain user-perceivable service data of same (or similar) quality. For the terminal device, service quality can be ensured, processing power consumption of a GPU is reduced, and processing power consumption of a baseband chip is not increased. In general, power consumption of processing the service data by the terminal device is reduced.

In some implementations, the first parameter includes at least one of a path loss, reference signal received power, a received signal strength indicator, reference signal received quality, and a signal to interference plus noise ratio.

In some implementations, the method further includes: obtaining a first threshold, where the first threshold is used to determine that the first parameter meets or does not meet the preset condition.

In some implementations, the first parameter is the path loss, and the first parameter meets the preset condition if a value of the first parameter is less than or equal to the first threshold; or the first parameter is at least one of the reference signal received power, the received signal strength indicator, the reference signal received quality, and the signal to interference plus noise ratio, and the first parameter meets the preset condition if a value of the first parameter is greater than or equal to a second threshold.

In some implementations, the method further includes: receiving first information, where the first information includes at least one of a first modulation and coding scheme, network apparatus load information or cell load information, downlink coverage information, uplink coverage information, and interference information, and the first information is used to determine that the first parameter meets or does not meet the preset condition.

In some implementations, obtaining the first threshold includes: determining the first threshold based on the first information.

In some implementations, the method further includes: obtaining first data, where the first data is quality data of one or more cells; and obtaining the first threshold includes: determining the first threshold based on the first data.

In some implementations, a third threshold is determined based on the first data, and the third threshold is used as the first threshold; or further, the first threshold is determined based on the third threshold.

In this manner, the terminal device determines the threshold based on a learning or statistical status of the terminal device. For example, the terminal device obtains specific statistical data based on a large quantity of tests in a cell environment, and can determine a proper first threshold in the cell environment.

In some implementations, determining the first threshold based on the third threshold includes: determining the first threshold based on first information and the third threshold, where the first information includes at least one of a first modulation and coding scheme, network apparatus load information or cell load information, downlink coverage information, uplink coverage information, and interference information.

In this manner, the terminal device comprehensively considers parameters affecting the state (or transmission quality) of the channel, so that accuracy of the determined threshold can be further improved.

In some implementations, the first information is the network apparatus load information or the cell load information, and the network apparatus load information or the cell load information includes a load factor.

In some implementations, obtaining the first threshold includes: receiving second information, where the second information indicates the first threshold.

For example, the network device may notify the terminal device of the first threshold via a system broadcast message or dedicated signaling (for example, a connection release message).

In this manner, the network device directly indicates the first threshold to the terminal device, and the terminal device does not need to autonomously determine the first threshold. This can further reduce power consumption of the terminal device.

In some implementations, determining, based on the first parameter, that the preset condition is met further includes:
when the first parameter is the path loss, determining a first value based on the first parameter and a second parameter, where the first value is less than or equal to the first threshold; and determining that the preset condition is met, where the second parameter includes at least one of a maximum receive antenna quantity of the network apparatus, the first modulation and coding scheme, the network device load information or the cell load information, the downlink coverage information, the uplink coverage information, the interference information, a receive antenna gain of the network apparatus, and a coverage radius of the network apparatus; or
when the first parameter is at least one of the reference signal received power, the received signal strength indicator, the reference signal received quality, and the signal to interference plus noise ratio, determining a second value based on the first parameter and the second parameter, where the second value is greater than or equal to the second threshold; and determining that the preset condition is met.

It should be understood that an influence factor indicated by the network device may be applied to a parameter such as the path loss or the RSRP in a form of a specific function for further determining, or may be applied to the first threshold in a form of a specific function for further determining.

In some implementations, the method further includes: determining that a downlink path loss is less than or equal to a fourth threshold, and establishing a connection to the network device, where the fourth threshold is greater than or equal to the first threshold; or determining that at least one of downlink reference signal received power, a downlink received signal strength indicator, downlink reference signal received quality, and a downlink signal to interference plus noise ratio is greater than or equal to a fifth threshold, and establishing a connection to the network device, where the fifth threshold is less than or equal to the second threshold.

In this manner, a limitation of the preset condition is extended within a reasonable range, and the manner can be applied to more cell environments.

In some implementations, the method further includes: obtaining, from the network device, at least one of an uplink path loss, uplink reference signal received power, an uplink received signal strength indicator, uplink reference signal received quality, and an uplink signal to interference plus noise ratio; and determining, based on at least one of the uplink path loss, the uplink reference signal received power, the uplink received signal strength indicator, the uplink reference signal received quality, and the uplink signal to interference plus noise ratio, that the preset condition is met.

In other words, the uplink parameter is also applicable to the solution of this application.

In some implementations, determining that the first parameter meets the preset condition includes: determining a third value based on the first threshold and an offset, where the preset condition is met when a value of the first parameter is less than or equal to the third value or when a value of the first parameter is less than or equal to a sixth threshold, the offset is related to a second carrier, the sixth threshold is related to the second carrier, and the sixth threshold is different from the first threshold.

In some implementations, sending the data of the first service includes: sending the data of the first service by using only the second carrier, or sending the data of the first service by using at least the second carrier.

In this manner, a transmission resource of the data of the first service is limited to the second carrier, and a coverage capability of the second carrier is greater than that of a first carrier. This can further improve transmission quality of the data of the first service, and improve communication reliability.

In some implementations, the method further includes: sending a request message, where a limitation, requested by using the request message, on transmission of the data of the first service is: sending the data of the first service by using only the second carrier, or sending the data of the first service by using at least the second carrier, and the request message is carried in a radio resource control RRC connection establishment request, an RRC connection reestablishment request, an RRC connection resume request, or an assistance information message of the terminal device.

In some implementations, the request message includes at least one of a bearer ID, a flow ID, a session ID, a logical channel ID, and a logical channel group ID that correspond to the first service.

In some implementations, the method further includes: sending fourth information, where the fourth information indicates that a transmission resource of the data of the first service is the second carrier; or sending fifth information, where the fifth information indicates that the first processing manner is requested to be performed; and accessing a first random access resource, where the first random access resource belongs to the second carrier.

To be specific, the terminal device may explicitly request/indicate the network to limit data scheduling to the second carrier, or may implicitly indicate, by using a specific random access resource on the second carrier, that the network device needs to limit data scheduling to the second carrier.

In some implementations, the method further includes: ignoring a seventh threshold, where the seventh threshold is used to determine the downlink reference signal received power for uplink carrier selection.

In some implementations, the method further includes: when a path loss of the first carrier is less than or equal to an eighth threshold, sending sixth information, where the sixth information is used to cancel the limitation that the transmission resource of the data of the first service is only the second carrier, or cancel the limitation that the transmission resource of the data of the first service is at least the second carrier.

In this manner, when quality of an NUL carrier gradually improves, the terminal device may send an SUL carrier limitation cancellation request/indication to the network device, so that the UE can use the NUL carrier.

In some implementations, the method further includes: when a path loss of the first carrier is greater than or equal to a ninth threshold, requesting to switch a transmission resource of the data of the first service to the second carrier; or when the path loss of the first carrier is greater than or equal to the ninth threshold, switching the transmission resource of the data of the first service to the second carrier.

A type of the first carrier is different from a type of the second carrier. In other words, the coverage capability of the first carrier is different from the coverage capability of the second carrier, or a frequency of the first carrier is greater than a frequency of the second carrier. For example, the first carrier is an NUL carrier, and the second carrier is an SUL carrier.

In some implementations, when the first parameter is the path loss, and the downlink path loss is greater than or equal to a tenth threshold, stopping transmission of the data of the first service; or when the first parameter is at least one of the reference signal received power, the received signal strength indicator, the reference signal received quality, and the signal to interference plus noise ratio, and a downlink parameter corresponding to the first parameter is less than or equal to an eleventh threshold, stopping transmission of the data of the first service.

In other words, when the state of the channel may change and the related condition is no longer met, transmission of the data of the first service may be stopped.

According to a second aspect, a communication method is provided. The method may be performed by a network device, or may be performed by a chip or a circuit used for the network device. This is not limited in this application. For ease of description, the following uses an example in which the network device performs the method for description.

The method includes: The network device receives data of a first service from a terminal device, where the data of the first service is sent when a first parameter meets a preset condition, and the first parameter indicates a state of a channel between a terminal apparatus and a network apparatus; and the network device sends processed data of the first service to the terminal device.

In some implementations, when the first parameter meets the preset condition, a difference between power consumption of a first processing manner and power consumption of a second processing manner is less than or equal to P, and P is greater than or equal to 0; or a difference between power efficiency of the first processing manner and power efficiency of the second processing manner is greater than or equal to K, and K is greater than or equal to 0, where the second processing manner is that the terminal device processes the data of the first service.

In some implementations, the first parameter includes at least one of a path loss, reference signal received power, a received signal strength indicator, reference signal received quality, and a signal to interference plus noise ratio.

In some implementations, the first parameter is the path loss, and the first parameter meets the preset condition if a value of the first parameter is less than or equal to the first threshold; or the first parameter is at least one of the reference signal received power, the received signal strength indicator, the reference signal received quality, and the signal to interference plus noise ratio, and the first parameter meets the preset condition if a value of the first parameter is greater than or equal to a second threshold.

In some implementations, the method further includes: sending first information, where the first information includes at least one of a first modulation and coding scheme, network apparatus load information or cell load information, near-point information, uplink coverage information, and interference information, and the first information is used to determine that the first parameter meets or does not meet the preset condition.

In some implementations, the method further includes: sending second information, where the second information indicates the first threshold.

In some implementations, the method further includes: receiving a request message, where a limitation, requested by using the request message, on transmission of the data of the first service is: sending the data of the first service by using only a second carrier, or sending the data of the first service by using at least the second carrier, and the request message is carried in a radio resource control RRC connection establishment request, an RRC connection reestablishment request, an RRC connection resume request, or an assistance information message of the terminal device.

In some implementations, the method further includes: receiving fourth information, where the fourth information indicates that a transmission resource of the data of the first service is the second carrier; or receiving fifth information, where the fifth information indicates that the first processing manner is requested to be performed.

In some implementations, the method further includes: sending sixth information, where the sixth information is used to cancel the limitation that the transmission resource of the data of the first service is only the second carrier, or cancel the limitation that the transmission resource of the data of the first service is at least the second carrier, and a path loss of a first carrier is less than or equal to an eighth threshold.

It should be understood that the second aspect is an implementation of the network device corresponding to the first aspect. Explanations, supplements, and descriptions of beneficial effects of the first aspect are also applicable to the second aspect. Details are not described herein again.

According to a third aspect, a communication method is provided. The method may be performed by a terminal device, or may be performed by a chip or a circuit used for the terminal device. This is not limited in this application. For ease of description, the following uses an example in which the terminal device performs the method for description.

The method includes: The terminal device sends a request message, where the request message is used to request to limit transmission of data of a first service to a second carrier, or request to send the data of the first service by using at least the second carrier; the terminal device receives information about a first resource, where the first resource belongs to the second carrier, or a part of the first resource belongs to the second carrier; and the terminal device sends the data of the first service by using the first resource.

In this method, the terminal device requests to limit the data of the first service to the second carrier with a stronger coverage capability. This can improve transmission quality of the data of the first service, thereby improving communication reliability.

In some implementations, the request message includes at least one of a bearer identifier (identity document, ID), a flow ID, a session ID, a logical channel ID, and a logical channel group ID that correspond to the first service.

In some implementations, the request message is carried in a radio resource control (radio resource control, RRC) connection establishment request, an RRC connection reestablishment request, an RRC connection resume request, or an assistance information message of the terminal device.

According to a fourth aspect, a communication method is provided. The method may be performed by a network device, or may be performed by a chip or a circuit used for the network device. This is not limited in this application. For ease of description, the following uses an example in which the network device performs the method for description.

The method includes: The network device receives a request message, where the request message is used to request to limit transmission of data of a first service to a second carrier, or request to send the data of the first service by using at least the second carrier; the network device sends information about a first resource, where the first resource belongs to the second carrier, or a part of the first resource belongs to the second carrier; and the network device receives the data of the first service by using the first resource.

In some implementations, the request message includes at least one of a bearer ID, a flow ID, a session ID, a logical channel ID, and a logical channel group ID that correspond to the first service.

In some implementations, the request message is carried in an RRC connection establishment request, an RRC connection reestablishment request, an RRC connection resume request, or an assistance information message of a terminal device.

According to a fifth aspect, a communication apparatus is provided. The apparatus is configured to perform the method according to any one of the first aspect to the fourth aspect. Specifically, the apparatus may include a unit and/or a module configured to perform the method according to any one of the first aspect to the fourth aspect, for example, a processing unit and/or a communication unit.

In an implementation, the apparatus is a communication device (for example, a network device or a terminal device). When the apparatus is the communication device, the communication unit may be a transceiver or an input/output interface, and the processing unit may be a processor. Optionally, the transceiver may be a transceiver circuit. Optionally, the input/output interface may be an input/output circuit.

In another implementation, the apparatus is a chip, a chip system, or a circuit in a communication device (for example, a network device or a terminal device). When the apparatus is the chip, the chip system, or the circuit in the communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

According to a sixth aspect, a communication apparatus is provided. The apparatus includes a processor, configured to perform the method according to any one of the first aspect to the fourth aspect. The apparatus may further include: a memory, configured to store a computer program or instructions, where the processor executes the computer program or the instructions stored in the memory; and/or a communication interface, where the processor reads, through the communication interface, the instructions stored in the memory.

In an implementation, the apparatus is a communication device (for example, a network device or a terminal device).

In another implementation, the apparatus is a chip, a chip system, or a circuit in a communication device.

In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the foregoing information, the processor outputs the foregoing information to an interface, and transmits the information through the interface. After the foregoing information is output by the processor, other processing may further need to be performed on the information before the information arrives at the interface. Similarly, when the processor receives the foregoing input information, the interface obtains/receives the foregoing information, and inputs the foregoing information into the processor. Further, after the interface receives the foregoing information, other processing may need to be performed on the foregoing information before the foregoing information is input into the processor.

Unless otherwise specified, or if operations such as related transmitting, sending and obtaining/receiving do not conflict with actual functions or internal logic in related descriptions, the operations may be understood as operations such as outputting, receiving, and inputting, or may be understood as transmitting, sending and receiving operations performed by a radio frequency circuit and an antenna. This is not limited in this application.

In an implementation process, the processor may be a processor specially configured to perform these methods, or a processor, for example, a general-purpose processor, that executes a computer program or instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a seventh aspect, a computer-readable storage medium is provided. The computer-readable medium stores program code to be executed by a device, and the program code is for performing the method according to any one of the first aspect to the fourth aspect.

According to an eighth aspect, a computer program product including instructions is provided. When the computer program product runs on a computer, the computer is enabled to perform the method according to any one of the first aspect to the fourth aspect.

According to a ninth aspect, a communication system is provided. The communication system includes: the communication device according to the fifth aspect or the sixth aspect and configured to perform the method according to the first aspect, and the communication device according to the fifth aspect or the sixth aspect and configured to perform the method according to the second aspect; or the communication device according to the fifth aspect or the sixth aspect and configured to perform the method according to the third aspect, and the communication device according to the fifth aspect or the sixth aspect and configured to perform the method according to the fourth aspect.

### BRIEF DESCRIPTION OF DRAWINGS

FIG. 1 shows a system architecture to which an embodiment of this application is applicable;
FIG. 2 is a diagram of a computation and transmission boundary;
FIG. 3 is a diagram of a communication method according to an embodiment of this application;
FIG. 4 is a block diagram of a communication apparatus according to an embodiment of this application; and
FIG. 5 is a block diagram of another communication apparatus according to an embodiment of this application.

### DESCRIPTION OF EMBODIMENTS

The following describes technical solutions in embodiments of this application with reference to accompanying drawings.

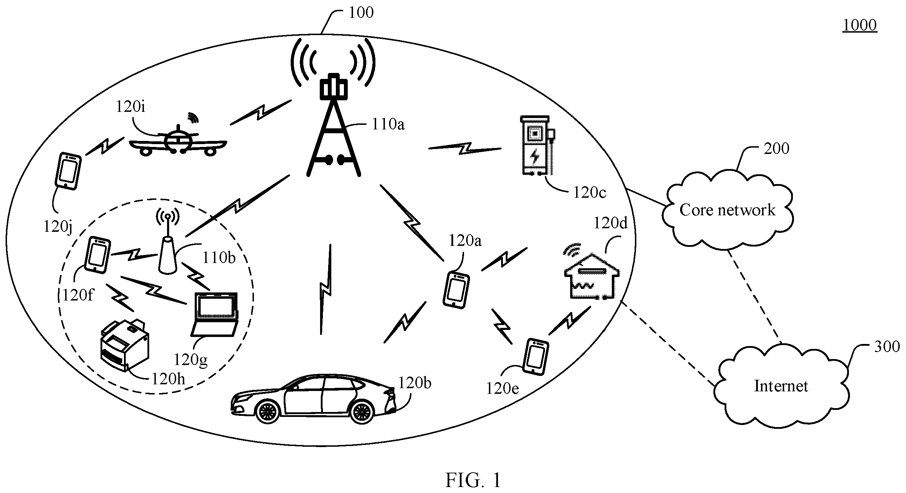

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). A terminal is connected to a radio access network device in a wireless manner, and the radio access network device is connected to the core network in a wireless or wired manner. The core network device and the radio access network device may be independent and different physical devices, or functions of the core network device and logical functions of the radio access network device are integrated into a same physical device, or a part of functions of the core network device and a part of functions of the radio access network device are integrated into one physical device. A wired or wireless manner may be used for a connection between terminals and a connection between radio access network devices. FIG. 1 is merely a diagram. The communication system may further include another network device, for example, may further include a wireless relay device and a wireless backhaul device, which are not shown in FIG. 1.

The network device may be a radio access network device, for example, may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or an access node in a Wi-Fi system; or may be a module or unit that completes a part of functions of the base station. For example, the radio access network device may include at least one of a centralized unit (centralized unit, CU), a distributed unit (distributed unit, DU), and a radio unit (radio unit, RU), where the centralized unit may also be referred to as a central unit (central unit, CU) or a control unit (control unit, CU). The CU herein completes functions of a radio resource control (radio resource control, RRC) layer and a packet data convergence protocol (packet data convergence protocol, PDCP) layer of the base station, and may further complete functions of a service data adaptation protocol (service data adaptation protocol, SDAP) layer; the DU completes functions of a radio link control (radio link control, RLC) layer and a medium access control (medium access control, MAC) layer of the base station, and may further complete a part of functions of a physical layer (for example, functions of a higher layer of the physical layer) or all functions of the physical layer; and the RU completes a radio frequency function, and may further complete a part of functions of the physical layer (for example, functions of a lower layer of the physical layer). For specific descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which a base station serves as the network device.

The terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, remote medical, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including indoors or outdoors, handheld or vehicle-mounted; may be deployed on water; or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for the terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, each of 110a and 110b in FIG. 1 may be referred to as a communication apparatus having a function of a base station, and each of 120a to 120j in FIG. 1 may be referred to as a communication apparatus having a function of a terminal.

Communication between the base station and the terminal, between the base stations, or between the terminals may be performed over a licensed spectrum, or may be performed over an unlicensed spectrum, or may be performed over both the licensed spectrum and the unlicensed spectrum. Communication may be performed over a spectrum below 6 gigahertz (gigahertz, GHz), or may be performed over a spectrum above 6 GHz, or may be performed over both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. The function of the terminal may be performed by a module (for example, a chip or a modem) in the terminal, or may be performed by an apparatus including the function of the terminal.

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission".

It may be understood that, in embodiments of this application, a physical uplink shared channel (physical downlink shared channel, PDSCH), a physical downlink control channel (physical downlink control channel, PDCCH), and a physical uplink shared channel (physical uplink shared channel, PUSCH) are merely respectively used as examples of a downlink data channel, a downlink control channel, and an uplink data channel. In different systems and different scenarios, a data channel and a control channel may have different names. This is not limited in embodiments of this application.

For ease of understanding the solutions in embodiments of this application, concepts in embodiments of this application are first explained.

### 1. Path loss (path loss, PL)

The PL, also referred to as a propagation loss, is a loss generated when an electric wave is propagated in space, is caused by radiation diffusion of transmit power and a propagation feature of a channel, and reflects a change of an average value of received signal power in a macroscopic range. Theoretically, path losses are also the same for same transmit/receive distances. However, in practice, it is often found that receive power at different receive points with same transmit/receive distances varies greatly, and even receive power at a same receive point also fluctuates greatly at different time points. It should be understood that the path loss includes an uplink path loss and a downlink path loss, the uplink path loss corresponds to uplink transmission, and the downlink path loss corresponds to downlink transmission.

### 2. Reference signal received power (reference signal received power, RSRP)

The RSRP represents radio signal strength, and is an average value of signal power received on all resource elements (resource element, RE) that carry reference signals in a symbol.

### 3. Reference signal received quality (reference signal received quality, RSRQ)

The RSRQ represents reference signal received quality. Different candidate cells can be sorted based on the reference signal quality. The RSRQ can also be used for cell handover and cell reselection.

### 4. Signal to interference plus noise ratio (signal to interference plus noise ratio, SINR)

The SINR is a ratio of strength of a received expected signal to strength of a received interference signal (noise and interference), and can be understood as a signal-to-noise ratio.

### 5. Local and cloud collaboration

A terminal device determines, based on a specific service requirement and a local computational power level, to offload a part of tasks (for example, compute tasks such as rendering and AI inference) to the cloud for processing. The terminal device needs to transmit a part or all of local data to the cloud for processing via a network device such as a base station or a core network through an uplink transmission path of a wireless network. After processing is completed, processed data on the cloud is downloaded through a downlink to the local for further processing, for example, the data is locally combined for processing, or is submitted to an application layer for processing. Through this collaborative processing operation, a high-quality service can still be ensured when the computational power level of the terminal device is limited. The following is also referred to as a device-cloud operation, cloud-based processing, or a first processing manner. If the collaborative processing task is completed locally on the terminal device, the following is referred to as local processing, or a second processing manner.

### 6. Computation and transmission balance boundary

On the premise that service output quality providing same (or similar) user experience is met, if energy consumed by a user to transmit a specific amount of uplink data at a location in a cell to a cloud for processing, obtain processed data from the cloud, and output user-perceivable service data (that is, the first processing manner) is equal to energy consumed by the user to locally perform computation processing (that is, the second processing manner) to obtain user-perceivable service data of same (or similar) quality, the location is defined as a computation and transmission balance location of the terminal in the cell. Further, a set formed by one or more computation and transmission balance locations is defined as a computation and transmission balance boundary.

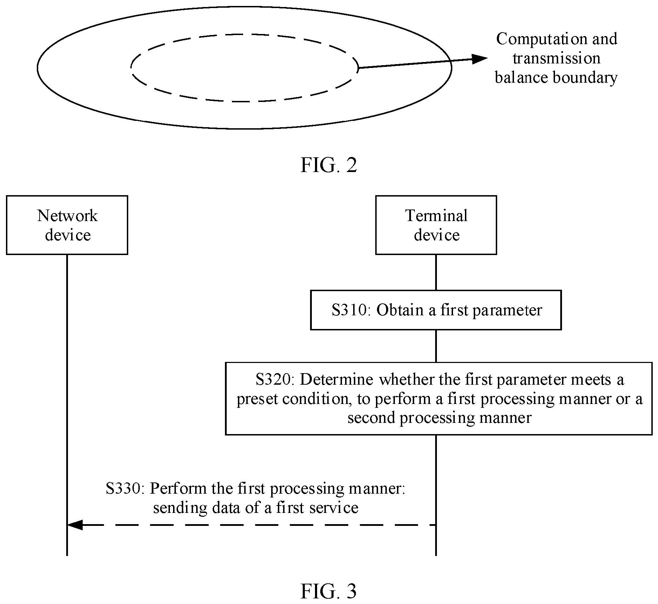

As shown in FIG. 2, a computation and transmission balance may be achieved on a boundary of a dashed ellipse. In the dashed ellipse area, the terminal device can reduce power consumption while ensuring service quality. The boundary of the dashed ellipse in the figure is the computation and transmission balance boundary. It should be noted that the boundary is merely an example, and in actual application, the boundary is different due to impact of a channel environment.

Services such as an extended reality (extended reality, XR) technology, holographic XR, cloud gaming, and artificial intelligence (artificial intelligence, AI) all require a low delay and a large amount of data service transmission, and therefore have increasingly higher requirements on a hardware computational power level, such as a GPU, a central processing unit (central processing unit, CPU), and a memory of a terminal. Cloud gaming is used as an example. Rendering effect of a mobile phone on a game is usually limited by rendering computational power. To obtain better rendering effect, the terminal may upload information such as to-be-rendered three-dimensional model data, a user location, and a rendering angle of view to the cloud, so that the cloud performs rendering, and then returns a rendering result to the terminal. The terminal performs post-processing and displays the rendering result to the user. A size of the three-dimensional model data that the user needs to upload ranges from 5 to 20 Mb, or is a large scene of about 100 Mb.

AI enhancement is also a typical example. For example, a transmit end performs quality degradation processing on a high-quality (high-resolution) image by using an AI algorithm to obtain a low-quality (low-resolution) image, to reduce transmission bandwidth consumption, and a receive end performs image enhancement by using an AI-based quality enhancement algorithm. To run AI-based video quality enhancement/degradation processing, the receive end needs to dynamically download and update an AI-based quality enhancement model (the AI-based quality enhancement model and weight parameters on the receive end need to match quality degradation weights, and the AI-based quality degradation algorithm weights are related to an image type and a scene and therefore frequently change). After the scene is changed, a new model needs to be downloaded to the local within 3s, with a model size of approximately 50 to 1.3 Gbits.

To reduce a processing burden of the terminal device, currently, there is a manner in the industry that a rendering task or an AI compute task is processed on the cloud, and then a result is downloaded to the terminal side after the cloud performs processing. This manner is usually referred to as cloud-based processing. Main disadvantages of cloud-only processing are as follows:
Costs: Cloud-only processing costs are high, and costs of a single channel are greater than 30,000.

Delay: Service delay requirements cannot be fully met.

Privacy: User privacy may be exposed.

Coverage: Coverage or capacity of a wireless network is uncertain. As a result, a part of rendering tasks still need to fall back to the device side in some scenes.

To reduce a processing burden of the terminal device while satisfying requirements such as service delay, cost, coverage, privacy, and the like, one manner currently used is mutual collaboration among the terminal, the network device, and the cloud for service processing. The terminal device offloads, based on a specific service requirement and a local computational power level, a part of compute tasks such as rendering and AI inference to the cloud for processing. Therefore, the terminal device needs to transmit a part or all of local data to the cloud for processing via the network device such as a base station or a core network through an uplink transmission path of the wireless network. After processing is completed, processed data on the cloud is downloaded through a downlink to the local for further processing, for example, the data is locally combined for processing, or is submitted to an application layer for processing. Through this collaborative processing operation, a high-quality service can still be ensured to some extent when the computational power level of the terminal device is limited.

However, due to a wireless coverage characteristic of the cellular network, many aspects such as cell signal quality, a network load degree, or a scheduling policy of the base station may affect performance of uplink data transmission of the terminal device. Currently, a manner of determining to offload a part of processing tasks to the cloud based on only a computational power level of the terminal device may cause additional power consumption of the terminal device. For example, when the terminal device is at a far point covered by a cell (for example, at a location close to a cell edge), although processing power consumption of a graphics processing unit (graphics processing unit, GPU) of the terminal device is reduced or processing requirements on a GPU of the terminal device are reduced by offloading compute tasks to the cloud for processing, processing power consumption of a baseband chip (for example, a communication chip like a modem chip) of the terminal device is increased. For example, in some areas of the cell, an increase in power consumption overheads of 150% or 200% for baseband processing may be required by the terminal device to complete a high-quality service (for example, a high-quality rendering picture or an AI inference result).

When the terminal device, the network device, and the cloud collaboratively process a service, how to efficiently control a balance between an increase in power consumption caused by a data transmission task caused by offloading computational power by the terminal device to the cloud and a decrease in local computation power consumption caused by offloading computational power to the cloud? To be specific, when user experience is similar or properly improved (for example, quality of experience is improved by 120%), how can the terminal device better determine a balance between power consumption overheads of local computation and power consumption overheads for data transmission between the terminal and the network, to implement optimal allocation of power resources of the terminal device between computation and transmission, thereby avoiding a waste of power resources? This is an urgent problem to be resolved.

In view of this, this application provides a communication method. In the communication method, a waste of power resources of a communication system can be avoided while user experience is similar or user experience is properly improved. The following describes the communication method in this application by using interaction between the network device and the terminal device as an example. Processing described below as being performed by a single execution body may alternatively be divided into processing performed by a plurality of execution bodies. These execution bodies may be logically and/or physically separated. For example, processing performed by the network device may be performed by at least one of a CU, a DU, and an RU.

As shown in FIG. 3, the method may include the following steps.

S310: The terminal device obtains a first parameter.

The first parameter indicates a state of a channel between the terminal device and the network device (for example, a first network device). For example, the first parameter may be a parameter such as a path loss, RSRP, an RSSI, RSRQ, or an SINR. For example, the first network device may be a base station.

It should be understood that all parameters that can represent a state of the channel between the terminal device and the network device may be applicable to solutions in embodiments of this application, and are not limited to the parameters listed above.

It should be understood that the state of the channel between the terminal device and the network device includes a channel state of an uplink channel and/or a channel state of a downlink channel, and each of the parameters in the first parameter may also include a parameter corresponding to the uplink channel and/or a parameter corresponding to the downlink channel. For example, the RSRP may include uplink RSRP and/or downlink RSRP.

In a possible implementation, for the downlink channel, the terminal device may measure a current channel, for example, measure a reference signal sent by the network device, to obtain a value of the first parameter. For the uplink channel, the network device may measure a current channel, to obtain a value of the first parameter, and indicate the value of the first parameter to the terminal device.

S320: The terminal device determines whether the first parameter meets a preset condition, to perform a first processing manner or a second processing manner.

For example, if the first parameter meets the preset condition, the terminal device performs the first processing manner; or if the first parameter does not meet the preset condition, the terminal device performs the second processing manner.

The first processing manner is that the terminal device sends data of a first service to the first network device, and receives processed data of the first service. The data of the first service may be processed by the first network device, that is, the first network device receives the data of the first service and processes the data of the first service. The data of the first service may alternatively be processed by a second device. The second device may be a cloud device, an AI processing device, an image rendering device, or the like. The second processing manner is that the terminal device processes the data of the first service. For example, the terminal device processes the data of the first service locally or processes the data of the first service by itself. The processing the data of the first service may be processing such as image rendering, video rendering, AI recognition, AI inference, or image and video enhancement.

Specifically, for the first processing manner and the second processing manner, refer to the foregoing descriptions. Details are not described again.

In a possible implementation, when the first parameter meets the preset condition, power consumption of the first processing manner is less than or equal to power consumption of the second processing manner. For example, a difference between the power consumption of the first processing manner and the power consumption of the second processing manner is less than or equal to P, and P is greater than or equal to 0.

That is, when the power consumption of the first processing manner is less than or equal to the power consumption of the second processing manner, the first processing manner is selected.

Optionally, when the power consumption of the first processing manner is close to the power consumption of the second processing manner, the first processing manner may still be selected. For example, a difference between the power consumption of the first processing manner and the power consumption of the second processing manner is within an allowed range. For example, if the power consumption of the first processing manner is 3, and the power consumption of the second processing manner is 5, the first processing manner is selected; or if the power consumption of the first processing manner is 4, and the power consumption of the second processing manner is 3.5, although the power consumption of the first processing manner is greater than the power consumption of the second processing manner, a difference between the power consumption of the first processing manner and the power consumption of the second processing manner is 0.5, and the difference is within an allowed range, the first processing manner may still be selected. It should be understood that the allowed range may be predefined, or may be configured.

In another possible implementation, when the first parameter meets the preset condition, power efficiency of the first processing manner is greater than or equal to power efficiency of the second processing manner. For example, a difference between the power efficiency of the first processing manner and the power efficiency of the second processing manner is greater than or equal to K, and K is greater than or equal to 0. The power efficiency is also referred to as power effectiveness or energy efficiency, and may be understood as a quantity of bits that can be transmitted per unit energy.

Similar to the foregoing explanations related to power consumption, optionally, when the power efficiency of the first processing manner is close to the power efficiency of the second processing manner, the first processing manner may still be selected. For example, a difference between the power efficiency of the first processing manner and the power efficiency of the second processing manner is within an allowed range. For example, a difference between the power efficiency of the first processing manner and the power efficiency of the second processing manner is less than 0 but is greater than or equal to E (E is less than 0). For example, if the power efficiency of the first processing manner is 3, and the power efficiency of the second processing manner is 1, the first processing manner is selected; or if the power efficiency of the first processing manner is 3, and the power efficiency of the second processing manner is 3.3, although the power efficiency of the first processing manner is less than the power efficiency of the second processing manner, a difference between the power efficiency of the first processing manner and the power efficiency of the second processing manner is 0.3, and the difference is within an allowed range, the first processing manner may still be selected. It should be understood that the allowed range may be predefined, or may be configured.

It should be further understood that both the manner of comparing the power consumption of the first processing manner with the power consumption of the second processing manner and the manner of comparing the power efficiency of the first processing manner with the power efficiency of the second processing manner uses differences as examples. This is not limited in this embodiment of this application. For example, the ratio-based comparison manner may be alternatively used for the value relationship. For example, when a ratio of the power consumption of the first processing manner to the power consumption of the second processing manner is less than or equal to 1, the first processing manner is selected; or when a ratio of the power efficiency of the first processing manner to the power efficiency of the second processing manner is greater than or equal to 1, the first processing manner is selected. It should be noted that, in the ratio-based comparison, if the ratio of the power consumption of the first processing manner to the power consumption of the second processing manner is greater than 1, and the ratio of the power efficiency of the first processing manner to the power efficiency of the second processing manner is less than 1, but the ratios are both within an allowed range, the first processing manner may still be selected.

Generally, energy efficiency of performing data transmission, especially uplink transmission, by the terminal device is related to data transmission efficiency of the terminal device. Factors affecting the energy efficiency include a channel environment, a base station transmit/receive antenna configuration, base station load, and the like. Impact of the channel environment is usually reflected in downlink coverage, uplink coverage, interference, and other aspects. For example, when a channel environment is good, transmission energy efficiency of the terminal device is high. However, in a same coverage condition, when the base station is heavily loaded, transmission energy efficiency of the terminal device is low. When load of the base station is lightly loaded, transmission energy efficiency of the terminal device is high.

In still another possible implementation, if the first parameter does not meet the preset condition, the second processing manner is performed. When the first parameter does not meet the preset condition, a difference between power consumption of the first processing manner and power consumption of the second processing manner is greater than M, and M is greater than or equal to 0; or a difference between power efficiency of the first processing manner and power efficiency of the second processing manner is less than N, and N is less than or equal to 0.

Specifically, when the first parameter does not meet the preset condition, the power consumption of the first processing manner is compared with the power consumption of the second processing manner, and the power efficiency of the first processing manner is compared with the power efficiency of the second processing manner, which are respectively opposite to those when the first parameter meets the preset condition. Correspondingly, for manners of comparing the power consumption and the power efficiency when the first parameter does not meet the preset condition, refer to the foregoing description when the first parameter meets the preset condition. Details are not described again.

It should be understood that the foregoing describes an example in which a difference-based comparison method, a ratio-based comparison method, or the like is used for the value relationship. However, this embodiment of this application is not limited thereto. Another method that can be used for comparing the value relationship should also fall within the protection scope of this application, for example, a manner of comparing values by using a logarithm.

Determining whether the first parameter meets the preset condition may be understood as determining whether the first processing manner in the current state of the channel is within a computation and transmission balance boundary.

The terminal device may obtain a first threshold by determining whether the first parameter meets the preset condition, and determine, based on the first threshold, whether the first parameter meets the preset condition. In other words, the first threshold is used to determine that the first parameter meets or does not meet the preset condition.

For example, the terminal device obtains the first threshold in the following manners.

Manner 1: The terminal device autonomously determines the first threshold A1.

For example, the terminal device determines the first threshold based on first data. For example, the terminal device determines a threshold (for example, a third threshold) based on the first data. The first data may be self-learned or statistical data. For example, the terminal device obtains specific statistical data based on a large quantity of tests in a cell environment, and determines a proper threshold. The third threshold may be a limit value A2 for the computation and transmission balance boundary.

Optionally, the terminal device may use the third threshold as the first threshold, or may further determine the first threshold based on the third threshold and other information.

It should be understood that the third threshold may be used only as an intermediate variable, or the third threshold is used only as a logical example of a computation process. For example, in a process in which the terminal device determines the first threshold based on the first data and the other information, the third threshold may exist or may not exist. For example, a threshold 1 (an example of the third threshold) is determined based on the first data, and then the threshold 1 is used as the first threshold. Alternatively, the terminal device further determines the first threshold based on a threshold 1 and other information. Alternatively, the terminal device directly determines the first threshold based on the first data and other information. This is not limited in this application.

Manner 2: The network device sends first information to the terminal device, and the terminal device receives the first information, and determines the first threshold based on the first information.

For example, the first information includes at least one of a first modulation and coding scheme (modulation and coding scheme, MCS), network apparatus load information or cell load information, downlink coverage information, uplink coverage information, and interference information.

The load information may be represented by physical resource block (physical resource block, PRB) utilization, or may be represented by a data transmission rate that can be provided by the cell or the network device.

The network device may provide downlink coverage information of a current network device (for example, a base station) or cell to the terminal device. For example, the network device may provide path loss or RSRP information of signal quality in an area such as a near point, a middle point, a mid-far point, or a far point of the current cell. For example, the terminal device may determine, based on measured RSRP of a synchronization signal block SSB, whether the terminal device is located near the middle point of the cell.

The network device may further provide uplink coverage information of the current network device (for example, the base station) or cell to the terminal device. For example, the network device may provide path loss or RSRP information of signal quality in the area such as the near point, the middle point, the mid-far point, or the far point of the current cell. For example, the terminal device may determine, based on measured RSRP of the synchronization signal block SSB, whether the terminal device is located near the middle point of the cell.

The network device may further provide interference information of the current network device (for example, the base station) or cell to the terminal device. For example, the network device may provide interference information about a low-interference area, a medium-interference area, or a heavy-interference area of the current cell. For example, the terminal device may determine, based on measured RSRP of the synchronization signal block SSB, whether the terminal device is located near the middle point of the cell.

The terminal device may determine, based on the first information, a more proper computation and transmission balance boundary or computation and transmission balance limit value, that is, the first threshold.

Manner 3: The terminal device determines the first threshold based on the third threshold in Manner 1 and the first information in Manner 2.

In a possible manner, the terminal device may adjust the third threshold based on the first information, to determine the first threshold. Alternatively, the terminal device determines the first threshold based on the first information and the third threshold.

For example, the first information is network apparatus load information or cell load information Z, and the network apparatus load information or the cell load information includes a load factor X. For example, the terminal device may determine the first threshold based on a function operation f(Z, A2) or f(X, A2). Optionally, A1=Z*A2 or A1=X*A2.

Optionally, in the foregoing manner, after determining the first threshold, the terminal device reports the first threshold to the network device. The network device further determines a limit value that needs to be used by the terminal device in the current network, and notifies the terminal device of the determined limit value via downlink signaling.

Manner 4: The network device indicates the first threshold to the terminal device.

For example, the network device sends second information to the terminal device. Correspondingly, the terminal device receives the second information, where the second information indicates the first threshold.

For example, the network device may determine, based on big data statistics or through machine learning, a computation and transmission balance area within a coverage area of the network device (for example, a base station), and notify the terminal device of the first parameter corresponding to a boundary of the computation and transmission balance area, for example, RSRP or path loss information. It should be understood that a value of the first parameter corresponding to the boundary of the computation and transmission balance area is the first threshold. In a possible implementation, the network device notifies the terminal device of the first threshold via a system broadcast message or dedicated signaling (for example, a connection release message).

For example, the terminal device may standardize a reference model in a specific manner. For example, the reference model may include one or more of parameters such as a cell radius, a load level of the network device (for example, the base station), transmit power of the network device, a quantity of transmit antennas of the network device, a quantity of receive antennas of the network device, a to-be-transmitted data amount of the terminal device, a scheduling scheme, and a modulation and coding scheme. Then, the terminal device obtains the computation and transmission balance boundary or limit information determined by the terminal device in the reference model, and reports the information to the network.

The modulation and coding scheme may be indicated by the network device to the terminal device. For example, the network device sends third information to the terminal device. Correspondingly, the terminal device receives the third information, where the third information indicates the modulation and coding scheme, and the modulation and coding scheme may be used to determine power consumption.

The network device further determines, based on the information reported by the terminal device, the computation and transmission balance boundary or limit value information that needs to be used by the terminal device, for example, an RSRP limit or a path loss limit. Specifically, after receiving the information reported by the terminal device, the network device may determine, based on a current configuration status of the network, for example, information such as a current cell radius and a base station configuration, a limit value that needs to be used by the terminal device in the current network. For ease of understanding, the first threshold determined by the terminal device and the limit value further determined by the network device are collectively described below by using the first threshold.

The terminal device obtains the first threshold, and may determine, based on the first threshold, whether the first parameter meets the preset condition.

When the first parameter is the path loss, and the first parameter is less than or equal to the first threshold, it is determined that the preset condition is met; or
when the first parameter is at least one of the reference signal received power, the received signal strength indicator, the reference signal received quality, and the signal to interference plus noise ratio, the first parameter meets the preset condition if a value of the first parameter is greater than or equal to a second threshold.

For a manner of determining the second threshold, refer to the foregoing manner of determining the first threshold. Details are not described again. The following uses the first threshold as an example for description.

Optionally, a first value is determined based on the first parameter and a second parameter, where the first value is less than or equal to the first threshold; and it is determined that the preset condition is met, where the second parameter includes at least one of a maximum receive antenna quantity of the network apparatus, a receive antenna gain of the network apparatus, and a coverage radius of the network apparatus.

A larger maximum receive antenna quantity of the network device (for example, the base station) or a larger receive antenna gain indicates better expected signal quality received by the network device, and therefore higher efficiency of sending uplink data by the terminal device to the network device. Therefore, theoretically, if the network device has a larger receive antenna quantity or a larger antenna gain, transmission energy consumption (that is, energy consumed for transmitting a same quantity of data) of the terminal device is correspondingly less under a same path loss or same RSRP. In this case, the computation and transmission balance limit based on the path loss or RSRP can be lowered as appropriate. Otherwise, the limit needs to be raised.

Specifically, the terminal device may determine, based on the maximum receive antenna quantity indicated by the network device (for example, the base station) or the receive antenna gain information of the network device, and in combination with another parameter such as path loss information or RSRP, whether to perform the first processing manner. A factor affecting the maximum receive antenna quantity or the receive antenna gain indicated by the network device may be applied to a parameter such as a path loss or RSRP in a form of a specific function, or may be applied to a computation and transmission balance limit value or boundary value (that is, the first threshold) in a form of a specific function.

For example, the path loss obtained by the terminal device is 3, the maximum receive antenna quantity indicated by the network device is 4, and the path loss used to determine whether the first parameter meets the preset condition may be f(3, 4). Alternatively, the first threshold may be f(4, A1), and then a value relationship between the path loss 3 and the first threshold is determined.

A size of a coverage radius of the network device also has a large impact on transmission energy efficiency of the terminal device. Generally, a larger coverage radius of the network device (for example, the base station) indicates poorer transmission energy efficiency of the terminal device at the mid-far point of the cell. The terminal device may determine, based on the coverage radius indicated by the network device and in combination with another parameter such as the path loss information or the RSRP, whether to perform the first processing manner. The coverage radius indicated by the network device may be applied to the first parameter such as the path loss or the RSRP in a form of a specific function, or may be applied to a computation and transmission balance limit value or boundary value (that is, the first threshold) in a form of a specific function.

It should be noted that an advantage of using the path loss as the first parameter is that different coverage radii, deployment scenarios with varying transmit power of the network device, impact of different environments (for example, foliage attenuation), or impact of receive antenna gains of different network devices (for an uplink path loss) can be considered. In addition, using the uplink path loss can better reflect a status of an actual transmission environment faced by the terminal device, for example, a state of the channel. In this way, the terminal device can accurately determine whether a current location or channel environment of the terminal device meets the preset condition. However, embodiments of this application are not limited to the path loss, and other parameters can also be applicable to the solutions of embodiments of this application. However, a manner of determining the other parameters is different from a manner of determining the path loss.

For example, when the first parameter is at least one of the reference signal received power, the received signal strength indicator, the reference signal received quality, and the signal to interference plus noise ratio, and the first parameter is greater than or equal to the second threshold, it is determined that the preset condition is met; or a second value is determined based on the first parameter and the second parameter, where the second value is greater than or equal to the second threshold, and it is determined that the preset condition is met.

That is, larger reference signal received power, a larger received signal strength indicator, larger reference signal received quality, or a larger signal to interference plus noise ratio indicates a better channel state, and a larger path loss indicates a poorer channel state.

It should be noted that, for different parameters, the first threshold may be different. For example, when the first parameter is the path loss, the first threshold is 3; or when the first threshold is the reference signal received power, the first threshold is 5. Alternatively, when the first parameter is the reference signal received power, the first threshold is 5; or when the first parameter is the interference plus noise ratio, the first threshold is 0.4.

In addition, when the first parameter is an uplink parameter, a value of the first threshold may be the same as or different from a value of the first threshold when the first parameter is a downlink parameter. For example, the first parameter is an uplink path loss, and a value of the first threshold is 3; or the first parameter is a downlink parameter, and a value of the first threshold is 3. Alternatively, the first parameter is an uplink path loss, and a value of the first threshold is 3; or the first parameter is a downlink parameter, and a value of the first threshold is 2. Other parameters are similar. Details are not described herein.

It should be understood that the foregoing values are merely used as an example rather than a limitation. Different parameters correspond to different units of the first threshold.

Optionally, the load information or the load factor may alternatively be combined with the first parameter, to determine whether the first parameter meets the preset condition. For example, the first parameter is the path loss, the load information is Z, and the load factor is X. The terminal device may determine, by comparing a value of a function operation f(Z, path loss) or f(X, path loss) with a computation and transmission balance boundary/limit value (that is, the first threshold), whether to perform the first processing manner. f(Z, path loss) may be equal to Z*DL path loss of the terminal device or Z*UL path loss of the terminal device. For example, if the current network is lightly loaded, and PRB utilization is only 0.5, the terminal device may multiply the path loss of the terminal device by 0.5 when determining whether to perform the first processing manner. Alternatively, the PRB utilization is 0.5, and the load factor may be 0.8 or another value. The terminal device may multiply the path loss by 0.8, and then compare the result with the computation and transmission balance limit value (namely, the first threshold), to determine whether to perform the first processing manner.

It should be noted that the foregoing is merely an example. A specific function f, whether a specific operation is multiplication, specific load information Z, or a specific load factor X may be determined or selected based on an actual situation of the network.

The foregoing downlink parameter is used as an example to describe the solution. It should be understood that the uplink parameter is also applicable to the solution in this embodiment of this application. For example, at least one of an uplink path loss, uplink reference signal received power, an uplink received signal strength indicator, uplink reference signal received quality, and an uplink signal to interference plus noise ratio is obtained from the network device; and whether the preset condition is met is determined based on at least one of the uplink path loss, the uplink reference signal received power, the uplink received signal strength indicator, the uplink reference signal received quality, and the uplink signal to interference plus noise ratio.

Optionally, for the terminal device in an idle (idle) state or an inactive (inactive) state, the terminal device needs to perform a specific task based on triggering of an application layer or another condition. For example, the terminal device needs to perform a task such as photographing, an XR service, or cloud gaming. The terminal device may determine, based on whether the first parameter meets the preset condition, whether to perform the first processing manner.

Specifically, for example, the path loss is used as the first parameter. If a downlink path loss is less than the first threshold, the terminal device determines to perform the first processing manner, and initiates a process of establishing a connection to the network.

Further, the terminal device may first determine, based on a specific limit, to enter a connected state, and then determine, based on an uplink path loss obtained in the connected state, whether to perform the first processing manner.

For example, the terminal device determines, based on the downlink path loss, whether to enter the connected state. For example, if the downlink path loss is less than or equal to a fourth threshold, the terminal device determines to establish a connection to the network, and enters the connected state. The fourth threshold is greater than or equal to the first threshold.

Alternatively, the terminal device obtains uplink path loss information, and determines, based on the uplink path loss, whether to enter the connected state. For example, the terminal device requests the network device to obtain the uplink path loss information. If the uplink path loss is less than or equal to a threshold, the terminal device determines to perform the first processing manner. Otherwise, the terminal device determines to perform the second processing manner. The threshold may be predefined or configured.

Alternatively, it is determined that at least one of downlink reference signal received power, a downlink received signal strength indicator, downlink reference signal received quality, and a downlink signal to interference plus noise ratio is greater than or equal to a fifth threshold, and a connection is established to the network device, where the fifth threshold is less than or equal to the second threshold.

Optionally, the terminal device determines, based on the first parameter, the first threshold, and an offset, whether to perform the first processing manner. The offset is related to a second carrier. For example, the second carrier is a supplementary uplink (supplementary uplink, SUL) carrier. It should be understood that the second carrier is not limited thereto, and other carriers that can implement better uplink coverage should fall within the protection scope of this application. A first carrier in embodiments of this application is a non-supplementary uplink (non-supplementary uplink, NUL) carrier.

A third value is determined based on the first threshold and an offset, where the preset condition is met when a value of the first parameter is less than or equal to the third value, or a value of the first parameter is less than or equal to a sixth threshold, the offset is related to the second carrier, and the sixth threshold is different from the first threshold. Uplink coverage of the second carrier is greater than uplink coverage of the first carrier. The sixth threshold is related to the second carrier. For example, the sixth threshold is a limit value for the second carrier alone.

For example, the first parameter is the path loss. If the path loss of the terminal device is less than or equal to the third value, the terminal device determines to perform the first processing manner, establishes a connection to the network, and enters the connected state. Otherwise, the terminal device determines to perform the second processing manner.

That the first parameter is the reference signal received power is used as an example. If the reference signal received power of the terminal device is greater than or equal to a fourth value determined based on the second threshold and the offset, the terminal device establishes the connection to the network device. Alternatively, the reference signal received power of the terminal device is greater than or equal to a threshold S, and the terminal device establishes a connection to the network device. The threshold S is less than the second threshold.

In a possible implementation, in a process of establishing the connection to the network or after establishing the connection to the network, the terminal device requests the network device to limit data transmission to the second carrier or to use at least a resource of the second carrier. In other words, only the second carrier is used to send the data of the first service, or at least the second carrier is used to send the data of the first service.

Sending the data of the first service by using at least the second carrier may be using the second carrier according to a specific proportion. For example, 80% of the data of the first service is transmitted by using the second carrier. In other words, the SUL carrier can be efficiently used to improve user experience by maximizing the use of the SUL carrier while balancing power consumption for computation and transmission.

The terminal device may explicitly request or indicate the network device to limit a resource for data scheduling to the second carrier. For example, the terminal device sends a request message to the network device, where a limitation, requested by using the request message, on transmission of the data of the first service is: sending the data of the first service by using only the second carrier, or sending the data of the first service by using at least the second carrier. Optionally, the request message is carried in a radio resource control RRC connection establishment request, an RRC connection reestablishment request, an RRC connection resume request, or an assistance information message of the terminal device.

Alternatively, the terminal device may report, to the network device, an indication for performing the first processing manner or a request for performing the first processing manner. For example, the terminal device sends fourth information, where the fourth information indicates that a transmission resource of the data of the first service is the second carrier; or sends fifth information, where the fifth information indicates that the first processing manner is requested to be performed.

The request message may include at least one of a bearer ID, a flow ID, a session ID, a logical channel ID, and a logical channel group ID that correspond to the first service.

The terminal device may further implicitly indicate, by using a specific random access resource on the second carrier, the network device to limit transmission of the data of the first service to the second carrier. In this manner, the network device needs to provide, for the terminal device, the random access resource (for example, a first random access resource) that is on the second carrier and that is specifically used for the first processing manner. If the terminal device determines that the first processing manner can be performed based on SUL carrier transmission, the terminal device selects a random access resource on the SUL carrier for access during selection of the random access carrier, and ignores determining of a DL RSRP limit (namely, a seventh threshold) used for uplink carrier selection, that is, the terminal device no longer uses the DL RSRP limit (namely, the seventh threshold) used for uplink carrier selection as a determining condition for determining whether to perform access. Alternatively, the network device may deliver, to the terminal device, a DL RSRP limit used for additional uplink carrier selection. For random access triggered in the first processing manner, the terminal device may perform carrier selection by using a dedicated DL RSRP limit.

It should be understood that a solution in which the terminal device uses only the second carrier or at least the second carrier may alternatively be independently implemented. For example, the terminal device does not need to determine whether the first parameter meets the preset condition, and may request the network device to send the data of the first service by using only the second carrier or at least the second carrier. For example, the terminal device sends a request message to the network device, where a limitation, requested by using the request message, on transmission of the data of the first service is: sending the data of the first service by using only the second carrier, or sending the data of the first service by using at least the second carrier. The network device sends information about a first resource to the terminal device, where the first resource belongs to the second carrier, or a part of the first resource belongs to the second carrier. The terminal device sends the data of the first service to the network device by using the first resource.

Optionally, in S330, the terminal device performs the first processing manner.

The terminal device performs the first processing manner, that is, the terminal device sends the data of the first service to the network device. Correspondingly, the network device receives the data of the first service.

In a possible implementation, after the terminal device meets the preset condition and performs random access to establish a connection to the network, the terminal device enters the connected state. In a moving process, the terminal device may further measure the first parameter of the service area. The following uses an example in which the path loss is used as the first parameter for description.

The terminal device may measure a downlink path loss, or obtain an uplink path loss from the network device, and determine, based on the downlink path loss and/or the uplink path loss, whether to continue performing the first processing manner (or referred to as device-cloud data transmission).

For example, when the first parameter is the path loss, and the downlink path loss is greater than or equal to a tenth threshold, transmission of the data of the first service is stopped; or when the uplink path loss is greater than or equal to a threshold L, transmission of the data of the first service is stopped.

When the first parameter is at least one of the reference signal received power, the received signal strength indicator, the reference signal received quality, and the signal to interference plus noise ratio, and a downlink parameter corresponding to the first parameter is less than or equal to an eleventh threshold, transmission of the data of the first service is stopped; or when a downlink parameter corresponding to the first parameter is less than or equal to a threshold G, transmission of the data of the first service is stopped.

The threshold L may be the same as or different from the tenth threshold. The threshold G may be the same as or different from the eleventh threshold.

Specifically, one or more of the following manners may be performed.

Manner A: If the downlink path loss is greater than or equal to a limit C1 (namely, the tenth threshold), the terminal device stops performing the first processing manner. Further, to prevent ping-pong caused by starting/stopping of the first processing manner, a hysteresis may be added on the basis of the foregoing limit. For example, when the downlink path loss of the terminal device is continuously less than the seventh threshold within time T1, the terminal device stops performing the first processing manner, where T1 is hysteresis time. Alternatively, when the downlink path loss of the terminal device is less than C1+D1, the terminal device stops performing the first processing manner, where D1 is an additional hysteresis.

Manner B: If the uplink path loss is greater than or equal to a limit C2 (namely, the eleventh threshold), the terminal device stops performing the first processing manner. Further, to prevent ping-pong caused by starting/stopping of the first processing manner, a hysteresis may be added on the basis of the foregoing limit. For example, when the uplink path loss of the terminal device is continuously less than C2 within time T1, the terminal device stops performing the first processing manner, where T2 is hysteresis time. Alternatively, when the uplink path loss of the terminal device is less than C2+D2, the terminal device stops performing the first processing manner, where D2 is an additional hysteresis.

Manner C: If the downlink path loss is greater than or equal to a limit C1 and the uplink path loss is greater than or equal to a limit C2, the terminal device stops performing the first processing manner. Further, to prevent ping-pong caused by starting/stopping of a device-cloud operation, a hysteresis may be added on the basis of the foregoing limit. For example, when the downlink path loss of the terminal device is continuously less than C1 within time T1 and the uplink path loss of the terminal device is continuously less than C2 within the time T1, the terminal device stops performing the first processing manner, where T1 is hysteresis time. Alternatively, when the downlink path loss of the terminal device is greater than or equal to C1+D1, and the uplink path loss of the terminal device is greater than or less than C2+D2, the terminal device stops performing the first processing manner, where D2 is an additional hysteresis.

In another possible implementation, when the path loss of the first carrier (namely, the NUL carrier) is less than or equal to a threshold (namely, an eighth threshold), sixth information may be sent to the network device, where the sixth information is used to cancel the limitation that the transmission resource of the data of the first service is only the second carrier, or cancel the limitation that the transmission resource of the data of the first service is at least the second carrier. For example, if the terminal device enters the connected state from the SUL carrier to perform the first processing manner, quality of the terminal device on the NUL carrier gradually improves in the moving process of the terminal device. For example, if the path loss of the terminal device is less than a threshold E1, after the terminal device enters an uplink computation and transmission balance area of the NUL carrier, the terminal device may send an SUL carrier limitation cancellation request/indication to the network device, so that the terminal device can use the NUL carrier.

In another possible implementation, if the terminal device enters the connected state from the first carrier (NUL carrier) to perform the first processing manner, when the path loss of the first carrier is greater than or equal to a ninth threshold, the terminal device switches the transmission resource of the data of the first service to the second carrier. For example, in a moving process of the terminal device, if quality of the terminal device on the NUL carrier gradually decreases to a limit, for example, the path loss of the terminal device on the NUL carrier is greater than a limit E2, the terminal device may actively switch to the second carrier (SUL carrier), and request the network device to limit scheduling of data transmission of the terminal device to the SUL carrier. Alternatively, based on a measurement result reported by the terminal device and a request reported by the terminal device, for example, the request message for performing the first processing manner by the terminal device, the network device limits scheduling of the service data to the SUL carrier.

In the method, selection of computation and transmission operations of the terminal device is efficiently controlled based on determining of the computation and transmission balance boundary, and power consumption of device-cloud data transmission and local computation power consumption are balanced, so that the terminal device can obtain optimal service experience at a proper power consumption level. For example, whether a state of the channel meets the preset condition is determined to determine whether to perform local processing or cloud-based processing, so that a balance between power consumption overheads of local computation and power consumption overheads for data transmission between the terminal device and the network device can be better determined, to implement optimal allocation of power resources of the terminal device between computation and transmission, thereby avoiding a waste of power resources. Further, by using a specific mechanism, for example, carrier management and obtaining relatively accurate parameter information such as the path loss, a balance between computation and transmission tasks of the terminal device can be effectively controlled, thereby improving efficiency of allocating power resources to the computation and transmission tasks, and ensuring efficient use of the power resources.

It should be understood that there are a plurality of thresholds in this application, for example, the first threshold to the eleventh threshold, the threshold L, and the threshold G. Thresholds with different names usually have different values. However, this is not limited in this application. For example, values of thresholds with different names may alternatively be the same in some implementations. The threshold, the limit, and the like in this application represent meanings of the determining condition. In embodiments of this application, the threshold and the limit may be interchangeable.

It may be understood that to implement functions in the foregoing embodiments, the base station and the terminal include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

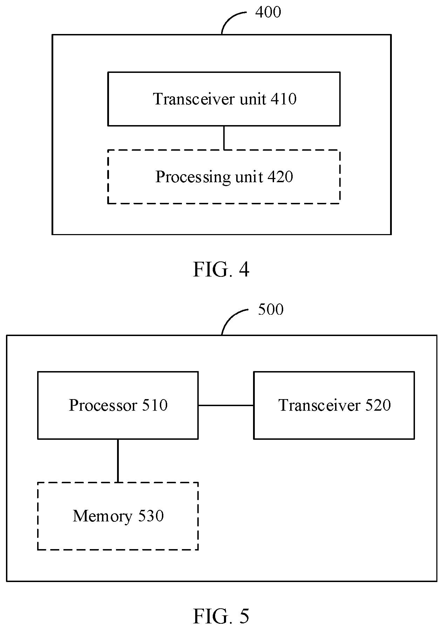

FIG. 4 and FIG. 5 are diagrams of structures of possible communication apparatuses according to embodiments of this application. The communication apparatuses may be configured to implement the functions of the terminal or the base station in the foregoing method embodiments, and therefore can also achieve beneficial effect of the foregoing method embodiments. In this embodiment of this application, the communication apparatus may be one of the terminals 120a to 120j shown in FIG. 1, or may be the base station 110a or 110b shown in FIG. 1, or may be a module (such as a chip) used in the terminal or the base station.

As shown in FIG. 4, a communication apparatus 400 includes a processing unit 410 and a transceiver unit 420. The communication apparatus 400 is configured to implement the functions of the terminal device or the network device in the method embodiment shown in FIG. 3.

When the communication apparatus 400 is configured to implement the functions of the terminal device in the method embodiment shown in FIG. 3, the transceiver unit 420 may be configured to receive a first parameter; the processing unit 410 is configured to perform a first processing manner if the first parameter meets a preset condition; and the transceiver unit 420 is further configured to send data of a first service.

When the communication apparatus 400 is configured to implement the functions of the network device in the method embodiment shown in FIG. 3, the transceiver unit 420 is configured to send the first parameter, and the transceiver unit 420 is further configured to receive the data of the first service.

For more detailed descriptions of the processing unit 410 and the transceiver unit 420, directly refer to related descriptions in the method embodiment shown in FIG. 3. Details are not described herein again.

As shown in FIG. 5, the communication apparatus 500 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530 configured to store instructions to be executed by the processor 510, store input data required for the processor 510 to run the instructions, or store data generated after the processor 510 runs the instructions.

When the communication apparatus 500 is configured to implement the method shown in FIG. 3, the processor 510 is configured to implement the functions of the processing unit 410, and the interface circuit 520 is configured to implement the functions of the transceiver unit 420.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the foregoing communication apparatus is a module used in a base station, the base station module implements a function of the base station in the foregoing method embodiment. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

Depending on whether optional is used in this specification: In this application, "at least one" means one or more, and "a plurality of" means two or more. "And/or" describes an association relationship between associated objects, and indicates that three relationships may exist. For example, "A and/or B" may indicate the following cases: Only "A" exists, only "B" exists, and both "A" and "B" exist, where "A" and "B" may be singular or plural. In the text descriptions of this application, the character "/" usually indicates an "or" relationship between the associated objects. In a formula in this application, the character "/" indicates a "division" relationship between the associated objects. "At least one of the following" or a similar expression thereof indicates any combination of listed items. For example, at least one of A, B, and (or) C may indicate the following cases: Only A exists, only B exists, only C exists, both A and B exist, both B and C exist, both A and C exist, and all A, B, and C exist, where A, B, and C may be singular or plural.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
obtaining a first parameter, wherein the first parameter indicates a state of a channel between a terminal device and a network device; and
if the first parameter meets a preset condition, performing a first processing manner, wherein the first processing manner is that the terminal device sends data of a first service to the network device, and receives processed data of the first service.

2. The method according to claim 1, wherein when the first parameter meets the preset condition, a difference between power consumption of the first processing manner and power consumption of a second processing manner is less than or equal to P, and P is greater than or equal to 0; or a difference between power efficiency of the first processing manner and power efficiency of the second processing manner is greater than or equal to K, and K is greater than or equal to 0, wherein the second processing manner is that the terminal device processes the data of the first service.

3. The method according to claim 1 or 2, wherein the first parameter comprises at least one of a path loss, reference signal received power, a received signal strength indicator, reference signal received quality, and a signal to interference plus noise ratio.

4. The method according to any one of claims 1 to 3, wherein the method further comprises:
obtaining a first threshold, wherein the first threshold is used to determine that the first parameter meets or does not meet the preset condition.

5. The method according to claim 4, wherein
the first parameter is the path loss, and the first parameter meets the preset condition if a value of the first parameter is less than or equal to the first threshold; or
the first parameter is at least one of the reference signal received power, the received signal strength indicator, the reference signal received quality, and the signal to interference plus noise ratio, and the first parameter meets the preset condition if a value of the first parameter is greater than or equal to a second threshold.

6. The method according to claim 4 or 5, wherein the method further comprises:
receiving first information, wherein the first information comprises at least one of a first modulation and coding scheme, network apparatus load information or cell load information, downlink coverage information, uplink coverage information, and interference information, and the first information is used to determine that the first parameter meets or does not meet the preset condition.

7. The method according to claim 6, wherein obtaining the first threshold comprises:
determining the first threshold based on the first information.

8. The method according to claim 4 or 5, wherein the method further comprises:
obtaining first data, wherein the first data is quality data of one or more cells; and
obtaining the first threshold comprises:
determining the first threshold based on the first data.

9. The method according to claim 8, wherein determining the first threshold based on the first data comprises:
determining the first threshold based on first information and a third threshold, wherein the third threshold is determined based on the first data, and the first information comprises at least one of a first modulation and coding scheme, network apparatus load information or cell load information, downlink coverage information, uplink coverage information, and interference information.

10. The method according to claim 9, wherein the first information is the network apparatus load information or the cell load information, and the network apparatus load information or the cell load information comprises a load factor.

11. The method according to claim 4 or 5, wherein obtaining the first threshold comprises:
receiving second information, wherein the second information indicates the first threshold.

12. The method according to any one of claims 4 to 11, wherein determining, based on the first parameter, that the preset condition is met further comprises:
when the first parameter is the path loss, determining a first value based on the first parameter and a second parameter, wherein the first value is less than or equal to the first threshold; and determining that the preset condition is met, wherein the second parameter comprises at least one of a maximum receive antenna quantity of the network apparatus, the first modulation and coding scheme, the network device load information, the cell load information, the downlink coverage information, the uplink coverage information, the interference information, a receive antenna gain of the network apparatus, and a coverage radius of the network apparatus; or
when the first parameter is at least one of the reference signal received power, the received signal strength indicator, the reference signal received quality, and the signal to interference plus noise ratio, determining a second value based on the first parameter and the second parameter, wherein the second value is greater than or equal to the second threshold; and determining that the preset condition is met.

13. The method according to any one of claims 4 to 12, wherein the method further comprises:
determining that a downlink path loss is less than or equal to a fourth threshold, and establishing a connection to the network device, wherein the fourth threshold is greater than or equal to the first threshold; or
determining that at least one of downlink reference signal received power, a downlink received signal strength indicator, downlink reference signal received quality, and a downlink signal to interference plus noise ratio is greater than or equal to a fifth threshold, and establishing a connection to the network device, wherein the fifth threshold is less than or equal to the second threshold.

14. The method according to any one of claims 4 to 13, wherein determining that the first parameter meets the preset condition comprises:
determining a third value based on the first threshold and an offset, wherein the preset condition is met when a value of the first parameter is less than or equal to the third value or when a value of the first parameter is less than or equal to a sixth threshold, the offset is related to a second carrier, the sixth threshold is related to the second carrier, and the sixth threshold is different from the first threshold.

15. The method according to any one of claims 1 to 14, wherein sending the data of the first service comprises:
sending the data of the first service by using only the second carrier, or sending the data of the first service by using at least the second carrier.

16. The method according to claim 15, wherein the method further comprises:
sending a request message, wherein a limitation, requested by using the request message, on transmission of the data of the first service is: sending the data of the first service by using only the second carrier, or sending the data of the first service by using at least the second carrier, and the request message is carried in a radio resource control RRC connection establishment request, an RRC connection reestablishment request, an RRC connection resume request, or an assistance information message of the terminal device.

17. The method according to claim 15, wherein the method further comprises:
sending fourth information, wherein the fourth information indicates that a transmission resource of the data of the first service is the second carrier; or sending fifth information, wherein the fifth information indicates that the first processing manner is requested to be performed; and
accessing a first random access resource, wherein the first random access resource belongs to the second carrier.

18. The method according to claim 17, wherein the method further comprises:
ignoring a seventh threshold, wherein the seventh threshold is used to determine the downlink reference signal received power for uplink carrier selection.

19. The method according to any one of claims 15 to 18, wherein the method further comprises:
when a path loss of the first carrier is less than or equal to an eighth threshold, sending sixth information, wherein the sixth information is used to cancel the limitation that the transmission resource of the data of the first service is only the second carrier, or cancel the limitation that the transmission resource of the data of the first service is at least the second carrier.

20. The method according to claim 14, wherein the method further comprises:
when a path loss of a first carrier is greater than or equal to a ninth threshold, requesting to switch a transmission resource of the data of the first service to the second carrier; or when the path loss of the first carrier is greater than or equal to the ninth threshold, switching the transmission resource of the data of the first service to the second carrier.

21. The method according to any one of claims 1 to 20, wherein the method further comprises:
when the first parameter is the path loss, and the downlink path loss is greater than or equal to a tenth threshold, stopping transmission of the data of the first service; or
when the first parameter is at least one of the reference signal received power, the received signal strength indicator, the reference signal received quality, and the signal to interference plus noise ratio, and a downlink parameter corresponding to the first parameter is less than or equal to an eleventh threshold, stopping transmission of the data of the first service.

22. The method according to any one of claims 1 to 21, wherein the method further comprises:
if the first parameter does not meet the preset condition, performing second processing, wherein the second processing manner is that the terminal device processes the data of the first service.

23. The method according to claim 22, wherein when the first parameter does not meet the preset condition, a difference between power consumption of the first processing manner and power consumption of the second processing manner is greater than M, and M is greater than or equal to 0; or a difference between power efficiency of the first processing manner and power efficiency of the second processing manner is less than N, and N is less than or equal to 0.

24. A communication method, comprising:
receiving data of a first service from a terminal device, wherein the data of the first service is sent when the first parameter meets a preset condition, and the first parameter indicates a state of a channel between a terminal apparatus and a network apparatus; and
sending processed data of the first service to the terminal device.

25. The method according to claim 24, wherein when the first parameter meets the preset condition, a difference between power consumption of the first processing manner and power consumption of a second processing manner is less than or equal to P, and P is greater than or equal to 0; or a difference between power efficiency of the first processing manner and power efficiency of the second processing manner is greater than or equal to K, and K is greater than or equal to 0, wherein the second processing manner is that the terminal device processes the data of the first service.

26. The method according to claim 24 or 25, wherein the first parameter comprises at least one of a path loss, reference signal received power, a received signal strength indicator, reference signal received quality, and a signal to interference plus noise ratio.

27. The method according to claim 26, wherein
the first parameter is the path loss, and the first parameter meets the preset condition if a value of the first parameter is less than or equal to a first threshold; or
the first parameter is at least one of the reference signal received power, the received signal strength indicator, the reference signal received quality, and the signal to interference plus noise ratio, and the first parameter meets the preset condition if a value of the first parameter is greater than or equal to a second threshold.

28. The method according to any one of claims 24 to 27, wherein the method further comprises:
sending first information, wherein the first information comprises at least one of a first modulation and coding scheme, network apparatus load information or cell load information, downlink coverage information, uplink coverage information, and interference information, and the first information is used to determine that the first parameter meets or does not meet the preset condition.

29. The method according to any one of claims 24 to 28, wherein the method further comprises:
sending second information, wherein the second information indicates the first threshold.

30. The method according to any one of claims 24 to 29, wherein the method further comprises:
receiving a request message, wherein a limitation, requested by using the request message, on transmission of the data of the first service is: sending the data of the first service by using only the second carrier, or sending the data of the first service by using at least the second carrier, and the request message is carried in a radio resource control RRC connection establishment request, an RRC connection reestablishment request, an RRC connection resume request, or an assistance information message of the terminal device.

31. The method according to any one of claims 24 to 30, wherein the method further comprises:
receiving fourth information, wherein the fourth information indicates that a transmission resource of the data of the first service is the second carrier; or receiving fifth information, wherein the fifth information indicates that the first processing manner is requested to be performed.

32. The method according to any one of claims 24 to 31, wherein the method further comprises:
sending sixth information, wherein the sixth information is used to cancel the limitation that the transmission resource of the data of the first service is only the second carrier, or cancel the limitation that the transmission resource of the data of the first service is at least the second carrier, and a path loss of the first carrier is less than or equal to an eighth threshold.

33. A communication method, comprising:
sending a request message, wherein the request message is used to request to limit transmission of data of a first service to a second carrier, or request to send the data of the first service by using at least the second carrier; and
receiving information about a first resource, wherein the first resource belongs to the second carrier, or a part of the first resource belongs to the second carrier; and sending, by a terminal device, the data of the first service by using the first resource.

34. The method according to claim 33, wherein the request message comprises at least one of a bearer identifier ID, a flow ID, a session ID, a logical channel ID, and a logical channel group ID that correspond to the first service.

35. The method according to claim 33 or 34, wherein the request message is carried in a radio resource control RRC connection establishment request, an RRC connection reestablishment request, an RRC connection resume request, or an assistance information message of the terminal device.

36. A communication method, comprising:
receiving a request message, wherein the request message is used to request to limit transmission of data of a first service to a second carrier, or request to send the data of the first service by using at least the second carrier;
sending information about a first resource, wherein the first resource belongs to the second carrier, or a part of the first resource belongs to the second carrier; and
receiving the data of the first service by using the first resource.

37. The method according to claim 36, wherein the request message comprises at least one of a bearer ID, a flow ID, a session ID, a logical channel ID, and a logical channel group ID that correspond to the first service.

38. The method according to claim 36 or 37, wherein the request message is carried in an RRC connection establishment request, an RRC connection reestablishment request, an RRC connection resume request, or an assistance information message of a terminal device.

39. A communication apparatus, comprising a module configured to perform the method according to any one of claims 1 to 23, or comprising a module configured to perform the method according to any one of claims 24 to 32, or comprising a module configured to perform the method according to any one of claims 33 to 35, or comprising a module configured to perform the method according to any one of claims 36 to 38.

40. A communication apparatus, wherein the communication apparatus comprises a processor, and the processor is configured to perform the method according to any one of claims 1 to 23, or is configured to perform the method according to any one of claims 24 to 32, or is configured to perform the method according to any one of claims 33 to 35, or is configured to perform the method according to any one of claims 36 to 38.

41. A computer-readable storage medium, wherein the computer-readable storage medium stores a computer program or instructions, and when the computer program or the instructions are run on a computer, the computer is enabled to perform the method according to any one of claims 1 to 23, or the computer is enabled to perform the method according to any one of claims 24 to 32, or the computer is enabled to perform the method according to any one of claims 33 to 35, or the computer is enabled to perform the method according to any one of claims 36 to 38.

42. A computer program product, wherein the computer program product comprises instructions for performing the method according to any one of claims 1 to 23, or comprises instructions for performing the method according to any one of claims 24 to 32, or comprises instructions for performing the method according to any one of claims 33 to 35, or comprises instructions for performing the method according to any one of claims 36 to 38.
